# EUROPEAN PATENT APPLICATION

(11) **EP 1 881 445 A1**
(43) Date of publication of application: **23.01.2008**
(21) Application number: 06766515.8
(22) Date of filing: 09.06.2006
(51) Int. Cl.: G06K 19/00, G06K 19/073

(54) **POUCH AND INFORMATION LEAKAGE PROTECTIVE FILM**

(30) Priority: 17.06.2005 JP 2005177889; 24.06.2005 JP 2005185409
(71) Applicant: Orient Instrument Computer Co., Ltd, Osaka-shi, Osaka 536-0014 (JP)
(72) Inventor: ITO, Tomoaki c/o ORIENT INSTRUMENT COMPUTER CO.,, Osaka-s hi, Osaka; 5360014 (JP)
(74) Representative: Paul, Dieter-Alfred
(86) International application number: PCT/JP2006/311603
(87) International publication number: WO 2006/134835

(57) **Abstract**

There is provided a container for preventing stealage of information recorded in a medium such as a card and compatible with security check conducted by X-rays at an airport or the like.

A portable pouch 1 is of a bag-like shape and produced by base clothes 5 and 6, on which a laminated film 10 is laminated. The laminated film is a film including an aluminum foil layer 12 and a resin layer 13 laminated on each other. The aluminum foil layer 12 is set up to have a thickness so as to transmit X-rays and an electromagnetic wave of an extremely high-frequency range and to shield an electromagnetic wave of a high-frequency range.
The protection film 10 shields an electromagnetic wave generated from a card and prevents leakage of the electromagnetic wave, thereby avoiding skimming. Further, the protection film 10 transmits X-rays, thereby being compatible with X-ray check at an airport or the like.

## Description

### BACKGROUND OF THE INVENTION

### FIELD OF THE INVENTION

The present invention relates to portable containers such as a bag, a bag cargo, and a suitcase, especially to a container onto which a function of preventing leakage of personal information is added. Simultaneously, the present invention relates to a protection film for preventing leakage of information for use in the above-mentioned container, a pouch, or the like.

### DESCRIPTION OF THE RELATED ART

Bags or bag cargos such as a purse and a handbag are known from a long time ago and used daily by everyone. Such bags or bag cargos can contain not only coins or handkerchiefs but also cards such as plastic money and bank cards.
These cards include, for example, a card containing an embedded IC chip or the like as shown in the patent document 1. Such an IC chip records therein important information such as account information or personal identification numbers.
Further, such bags or bag cargos may contain a mobile phone therein.
Patent Document 1: JP 2005-73113A

### SUMMARY OF THE INVENTION

### PROBLEMS TO BE SOLVED BY THE INVENTION

Recently, a fraud so-called skimming has become a concern. Skimming is the act of reading data such as account information and personal identification numbers from other people's cards so as to withdraw his/her deposit or to purchase articles.
At the time of filing this application, few skimmers have been arrested and their tactics are not clear. However, cards containing embedded IC chips include non-contact IC cards, and it is said that such non-contact IC cards could be skimmed by taking advantage of crowded condition during commuting time. Specifically, such a non-contact IC card is a resin card containing an embedded coil and an IC chip, and thus, application of a magnetic field to the coil generates induced current, resulting in reading of data in the IC chip. Therefore, only by bringing of a card reader provided with a predetermined function closer to the card, data such as account information and personal identification numbers recorded in the IC chip may be read out.

Consequently, in the case that a person is close to other people like in a crowded train, if another person in proximity of the person has a card reader, there is a possibility that data such as a card account number would be skimmed. Further, recently, card readers improve in quality and card readers having substantially the same size as cards are also commercially available. On such present showing, there is rising concern about skimming, so that measures to prevent skimming have been desired.
One of the measures to prevent skimming would be performed by attaching a metal plate to a bag or a card holder so as to shield an electromagnetic wave leaking from a card contained therein. The present inventor experimentally produced a bag for preventing skimming with a metal plate attached to an inner surface of the bag so as to prevent an electromagnetic wave from leaking out of the bag.

However, as the bag had been produced and used experimentally, a serious problem was found.
Security check is often conducted by X-rays for the purpose of hijack prevention at places such as an airport. Specifically, X-rays are irradiated to a bag to see through the interior of a bag, so as to confirm no firearms or cutting tools to be carried within the bag.
However, the above-mentioned bag for preventing skimming has an attached metal plate, being opaque to X-rays, thereby failing to see therethrough. That may arise suspicion of airport screeners or the like, requiring to visually check the bag. Specifically, a person in charge such as a police officer may order an owner of the bag to open the bag and check the bag. Being ordered to open the bag by the person in charge would be bothersome, and looking inside the bag would embarrass the owner.
It is therefore an object of the present invention to provide a portable container adapted to prevent information recorded in a medium such as a card from being stolen and without being wrongly suspected by security check conducted by X-rays. Simultaneously, it is an object to provide a film for preventing a fraud such as skimming.

### MEANS TO SOLVE THE PROBLEM

The present invention uses a semi-transparent layer adapted to transmit an electromagnetic wave having a wavelength in X-ray range and to shield an electromagnetic wave having a wavelength in a range of an electromagnetic wave generated from a non-contact information recording medium as measures to solve the above-mentioned problems and drawbacks.
Herein, a "semi-transparent layer" denotes a layer that transmits an electromagnetic wave of a certain wavelength and shields an electromagnetic wave of another certain wavelength.

An aspect of the present invention is a portable container including in at least part thereof a semi-transparent layer adapted to transmit an electromagnetic wave having a wavelength in X-ray range and to shield an electromagnetic wave having a wavelength in a range of an electromagnetic wave generated from a non-contact information recording medium.

Another aspect of the present invention to solve the similar problems is a portable container including a storage section covered with a semi-transparent layer adapted to transmit an electromagnetic wave having a wavelength in X-ray range and to shield an electromagnetic wave having a wavelength in a range of an electromagnetic wave generated from a non-contact information recording medium.

The portable containers of the above-mentioned aspects each have a semi-transparent layer, which transmits an electromagnetic wave having a wavelength in X-ray range. Therefore, in security check conducted by X-rays, inside of the container can be seen through.
On the other hand, the above-mentioned semi-transparent layer shields an electromagnetic wave having a wavelength in a range of an electromagnetic wave generated from a non-contact information recording medium such as a credit card. Therefore, information recorded in a recording medium such as a card is prevented from leaking outside. The above-mentioned aspects were made by noting the fact that a wavelength of X-ray is extremely different from that of an electromagnetic wave generated from a non-contact information recording medium such as a credit card. Specifically, an electromagnetic wave (X-ray) for use in X-ray check is of a wavelength of about 0.1 angstrom or less, whereas a non-contact information recording medium such as a credit card has a frequency in a high-frequency range (about 13. 56 MHz at present) with a wavelength of about 10 m to 100 m.
In this way, an electromagnetic wave for use in X-ray check has a transmissivity extremely different from that generated from a non-contact information recording medium such as a credit card. That is why such a substance as transmitting an electromagnetic wave having a wavelength in X-ray range and as shielding an electromagnetic wave having a wavelength in a range of an electromagnetic wave generated from a non-contact information recording medium is present. When a transmissivity of an aluminum foil is measured, for example, by irradiating the foil with electromagnetic waves having different wavelengths, an electromagnetic wave in large quantity is transmitted in the case of a certain frequency or less (viz. a certain wavelength or more), but a transmitted electromagnetic wave is sharply reduced on reaching a certain frequency (wavelength). Increasing of a thickness of an aluminum foil or increasing of the number of aluminum foils to be laminated shortens a critical value of the above-mentioned wavelengths.

Still another aspect of the present invention is a portable container including in at least part thereof a semi-transparent layer adapted to transmit electromagnetic waves having a wavelength in X-ray range and having a wavelength in a range of a mobile phone and to shield an electromagnetic wave having a wavelength in a range of an electromagnetic wave generated from a non-contact information recording medium.

Yet another aspect of the present invention is a portable container including a storage section covered with a semi-transparent layer adapted to transmit electromagnetic waves having a wavelength in X-ray range and having a wavelength in a range of a mobile phone and to shield an electromagnetic wave having a wavelength in a range of an electromagnetic wave generated from a non-contact information recording medium.

The portable containers of the above-mentioned aspects each allow a mobile phone's owner to know when he/she has a phone call even if the mobile phone is contained therein.
A mobile phone is usually contained in a bag such as a handbag, but it is desirable to know to have a phone call. A semi-transparent layer of the present aspects transmits an electromagnetic wave having a wavelength in a range of a mobile phone, thereby allowing a mobile phone to have a phone call in a bag or the like.
Herein, a mobile phone has a frequency in an extremely high-frequency range (about 800 MHz, 1.5 GHz, and 2.4 GHz at present) with a wavelength shorter than that of an electromagnetic wave (high-frequency range) generated from a non-contact information recording medium such as a credit card described above. That is why such a substance as transmitting an electromagnetic wave having a wavelength in a range of a mobile phone and as shielding an electromagnetic wave having a wavelength in a range of an electromagnetic wave generated from a non-contact information recording medium is present.

The semi-transparent layer is preferably a film including a metal foil layer and a resin layer laminated on each other.

Further, it is preferable that the semi-transparent layer includes at least a first and a second metal foil layers, the first metal foil layer having a higher electromagnetic wave reflection than the second metal foil layer and the second metal foil layer having a higher electromagnetic wave absorption than the first metal foil layer, and the first metal foil layer being positioned at an outer side of the second metal foil layer.

Still further, the semi-transparent layer may be composed of a plurality of laminated films.

Yet still another aspect of the present invention is a portable container including a card insertion pocket, the card insertion pocket having a metal layer adapted to transmit an electromagnetic wave having a wavelength in X-ray range.

In the portable container of the present aspect, the card insertion pocket has a metal layer adapted to transmit an electromagnetic wave having a wavelength in X-ray range. That allows inside of the card insertion pocket to be seen through, in security check conducted by X-rays.
Further, in the container of the present aspect, the metal layer is arranged at a position adjacent to a card, thereby attenuating an electromagnetic wave or magnetic field lines generated from the card, so as to avoid skimming. In addition, the metal layer and an antenna incorporated in the card interfere with each other, thereby reducing the efficiency of the antenna.

Aspects of the present invention relating to a protection film for preventing leakage of information are as follows. One aspect of the present invention is a protection film for preventing leakage of information adapted to transmit an electromagnetic wave having a wavelength in X-ray range and to shield an electromagnetic wave having a wavelength in a range of an electromagnetic wave generated from a non-contact information recording medium.

Another aspect of the present invention is a protection film for preventing leakage of information adapted to transmit electromagnetic waves having a wavelength in X-ray range and having a wavelength in a range of a mobile phone and to shield an electromagnetic wave having a wavelength in a range of an electromagnetic wave generated from a non-contact information recording medium.

The protection film preferably includes a metal foil layer and a resin layer laminated on each other.

Further, the protection film preferably includes at least a first and a second metal foil layers, the first metal foil layer having a higher electromagnetic wave reflection than the second metal foil layer and the second metal foil layer having a higher electromagnetic wave absorption than the first metal foil layer.

The protection film may be composed of a plurality of laminated films.

The protection film may have an adhesion layer formed on at least one side of the film.

The protection film described above has an adhesion layer formed on one side of the film, so as to be applied to a pouch or a pass holder in existence to take measures against skimming. Further, application to a wall of a room or the like prevents an electromagnetic wave from leaking out of the room, thereby taking measures against wiretapping.

### ADVANTAGEOUS EFFECT OF THE INVENTION

The container of the present invention shields an electromagnetic wave or the like, thereby preventing stealage of information by skimming. Further, the container is compatible with security check conducted by X-rays, so as to avoid taking time for security check at an airport or the like.
The same can be said to the protection film for preventing leakage of information of the present invention, which prevents stealage of information by skimming and is compatible with security check conducted by X-rays.

### BRIEF DESCRIPTION OF THE DRAWING

Fig. 1 is a front view of a portable pouch of a first embodiment of the present invention;
Fig. 2 is an enlarged cross sectional view taken along a line A-A in Fig. 1;
Figs. 3A to 3C each are an enlarged cross sectional view of a laminated film (semi-transparent layer);
Fig. 4 is a front view of a handbag or a purse of a second embodiment of the present invention;
Fig. 5 is a front view of an inner pocket of the handbag in Fig. 4;
Fig. 6 is a perspective view showing the inner pocket in Fig. 5 with a card being inserted thereinto;
Fig. 7 is a cross sectional view of the inner pocket in Fig. 5;
Fig. 8 is a perspective view of a pass holder of a third embodiment of the present invention;
Fig. 9 is a front view showing the pass holder in Fig. 8 in an opened condition;
Fig. 10 is a perspective view of a wallet of a fourth embodiment of the present invention;
Fig. 11 is a perspective view of the wallet in Fig. 10 in an opened condition;
Figs. 12A and 12B are views of a card desirable to be inserted into the wallet in Fig. 10, Fig. 12A being a view of a front face of the card, and Fig. 12B being a view of a back face of the card;
Fig. 13 is a cross sectional view of the card in Fig. 12;
Fig. 14 is a perspective view of the wallet in Fig. 10 in which the card is inserted;
Figs. 15A and 15B each are a cross sectional view of a pocket of the wallet in Fig. 10 in which the card is inserted;
Figs. 16A and 16B each are a perspective view of the pocket of the wallet in Fig. 10 in which the card is inserted;
Fig. 17 is a front view of a pass holder of a fifth embodiment of the present invention in an opened condition;
Fig. 18 is a cross sectional view of a pocket of a pass holder of a sixth embodiment of the present invention in which a card is inserted;
Fig. 19 is an enlarged cross sectional view of a protection film for preventing leakage of information to be stuck on a wall;
Fig. 20 is a perspective view of the protection film in Fig. 19 in being stuck on a wall;
Fig. 21 is a perspective view of a card case made by a protection film for preventing leakage of information of the present invention;
Fig. 22 is an enlarged cross sectional view of a modified embodiment of the laminated film (protection film for preventing leakage of information);
Fig. 23 is an enlarged cross sectional view of another modified embodiment of the laminated film (protection film for preventing leakage of information);
Fig. 24 is an enlarged cross sectional view of still another modified embodiment of the laminated film (protection film for preventing leakage of information);
Fig. 25 is an enlarged cross sectional view of yet another modified embodiment of the laminated film (protection film for preventing leakage of information);
Fig. 26 is an enlarged cross sectional view of yet still another modified embodiment of the laminated film (protection film for preventing leakage of information); and
Fig. 27 is an enlarged cross sectional view of a further modified embodiment of the laminated film (protection film for preventing leakage of information).

### DESCRIPTION OF THE PREFERRED EMBODIMENT

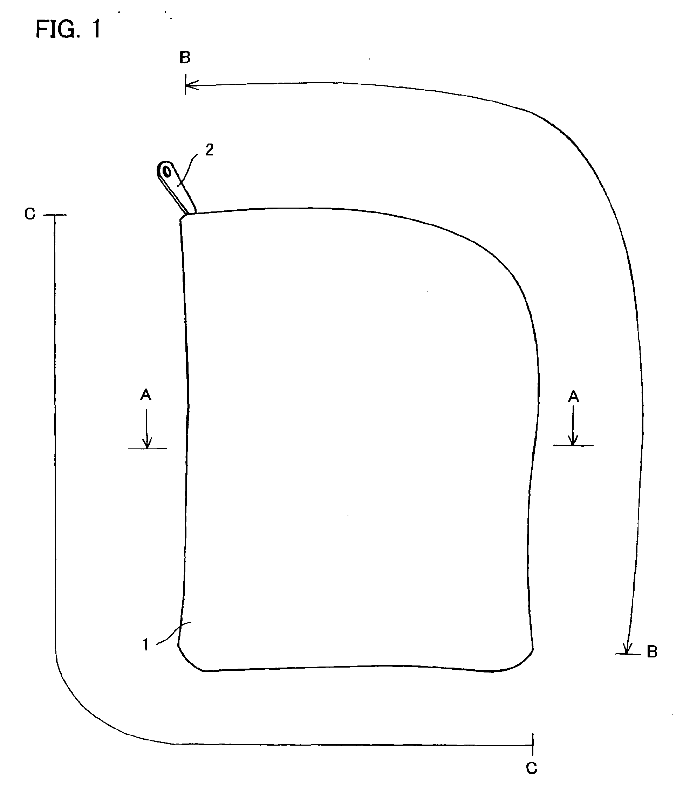

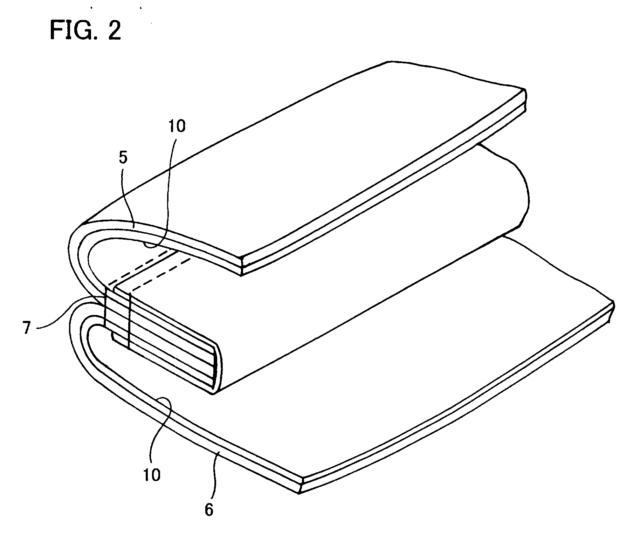

Now, embodiments of the present invention will be described below in detail, making reference to the accompanying drawings.
A portable pouch 1 shown in Fig. 1 has a substantially rectangular shape with an opening along two sides (an area B-B in Fig. 1). The opening has a zipper 2 attached thereto.
The pouch 1 is produced by sewing up the other two sides (an area C-C in Fig. 1) to be closed sides. Fig. 2 illustrates a structure of the sewn area. Specifically, the pouch 1 has a surface with an upper side made of a base cloth 5 and an under side made of another base cloth 6. The clothes 5 and 6 are lapped over each other and the edge of the lapped clothes 5 and 6 are sewn by a thread 7. The edge is stitched with another cloth, whereupon its front and back sides are reversed, so as to produce a pouch shape.

In particular, in the present embodiment, a laminated film (semi-transparent layer) 10 is laminated on each of the base clothes 5 and 6, so that the laminated film 10 is also sewn simultaneously with the clothes 5 and 6 in sewing as described above.
Consequently, the portable pouch 1 of the present embodiment has the laminated film 10 all over the inner surface thereof, which covers a storage section.

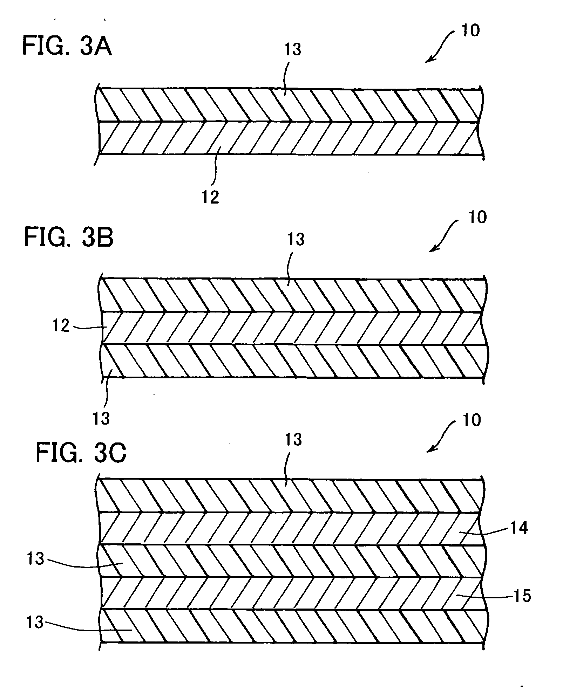

The laminated film 10 is equivalent to a material of a bag for snacks, for example, and, as shown in Fig. 3A, is a laminated film composed of an aluminum foil layer 12 and a resin layer 13.
Alternatively, as shown in Figs. 3B, the laminated film 10 may be a laminated film composed of an aluminum foil layer 12 sandwiched between two resin layers 13.
Further alternatively, as shown in Fig. 3C, the laminated film 10 may be a laminated film composed of two metal foil layers 14 and 15 or more with resin layers 13 between the two layers 14 and 15 and on the outer sides thereof.
Herein, the metal foil layers 14 and 15 may be made of the same kinds of metals (aluminum foil, for example), but also preferably made of different kinds of metals.

As to an example of a combination of the different kinds of metals, metal foil layers are preferably made by combining a metal having an electromagnetic wave reflection and another metal having an electromagnetic wave absorption.
The former metal having an electromagnetic wave reflection includes aluminum, silver, and copper. The latter metal having an electromagnetic wave absorption includes magnesium or alloyed metal containing magnesium.

In this case, the former metal is to be positioned at an outer side of the portable pouch 1 and the latter metal is to be positioned at an inner side thereof.
Such an arrangement precludes an influence of electromagnetic wave from outside by the former metal at the outer side and simultaneously prevents an electromagnetic wave outputted from a card from leaking outside by the latter metal at the inner side.
Herein, as an embodiment described below, in the case of the laminated film 10 partly attached, it is recommended to arrange the latter metal at a side facing a card or the like.

The aluminum foil layer 12 or the metal foil layers 14 and 15 of the laminated film 10 each are set up to have a thickness so as to transmit X-rays and an electromagnetic wave of an extremely high-frequency range and to substantially shield an electromagnetic wave of a high-frequency range.
Specifically, the laminated film 10 transmits electromagnetic waves having a wavelength in X-ray range and having a wavelength in a range of a mobile phone and shields an electromagnetic wave having a wavelength in a range of an electromagnetic wave generated from a non-contact information recording medium.
A thickness of the laminated film 10 is experimentally determined by trial and error. Specifically, a number of alternative laminated films 10 are prepared. Then, a credit card and a mobile phone covered with each of the prepared laminated films 10 are swiped through a card reader. Further, a phone call is made to the mobile phone from outside and whether the mobile phone has the phone call is confirmed. By such actions, a laminated film 10 that allows the mobile phone to have the phone call but prevents the card reader from reading the card is selected. Then, X-rays are irradiated to the selected laminated film 10 so as to confirm whether an inside covered with the laminated film 10 can be seen through or not in a monitor.
Thereby, a laminated film 10 adapted to transmit electromagnetic waves having a wavelength in X-ray range and having a wavelength in a range of a mobile phone and to shield an electromagnetic wave having a wavelength in a range of an electromagnetic wave generated from a non-contact information recording medium is selected.

Alternatively, a plurality of thin laminated films 10 may be prepared and laminated, so as to form a semi-transparent layer. Specifically, an appropriate number of thin laminated films 10 are laminated so as to form a semi-transparent layer. Then, a credit card and a mobile phone covered with the laminated films 10 (semi-transparent layer) are swiped through a card reader in the same manner as described above. After the same actions as described above, if the laminated films 10 (semi-transparent layer) cannot prevent the card reader from reading the card, a few more laminated films 10 are added to laminate the new number of films 10, so as to form another semi-transparent layer.

Then, X-rays are irradiated to the new number of laminated films 10 (the other semi-transparent layer) so as to confirm whether an inside covered with the laminated films 10 can be seen through or not in a monitor. If the inside can be seen through in the monitor, whether the mobile phone can have a phone call or not is confirmed. If the mobile phone can have the phone call, this number of laminated films 10 is employed. If the mobile phone cannot have the phone call, the number of laminated films 10 is reduced until the mobile phone can have a phone call.

If the inside cannot be seen through by an X-ray examination as described above, the number of laminated films 10 is reduced until the inside can be seen through, and then whether the mobile phone can have a phone call or not is confirmed.

The resin layer 13 of the laminated film 10 may be made of any material only if it is a known resin capable of being made into a film. The material to be used includes a resin such as cellophane, polyethylene, stretched polypropylene, unstretched polypropylene, polyethylene terephthalate, polyvinylidene chloride coated biaxial stretched polypropylene, K-coat polyethylene terephthalate, and ethylene-vinylalcohol copolymer.

The portable pouch 1 of the present embodiment has a space therewithin, into which an article such as a card is put with the zipper 2 opened. The pouch 1 has the laminated film 10 consisting of the aluminum foil layer 12 and the resin layer 13 all over its inner surface, thereby preventing an electromagnetic wave emitted out of the card from leaking outside. That avoids skimming.
Further, since an electromagnetic wave of a frequency used in a mobile phone is transmitted, a mobile phone contained in the portable pouch 1 has a phone call.
On the other hand, when security check is conducted by X-rays at an airport or the like, the portable pouch 1 transmits X-rays, so as to avoid being regarded with suspicion by examiners.

Further, the laminated film 10 is simultaneously sewed in sewing the clothes 5 and 6, so that the pouch 1 is easily produced.

In the embodiment described above, the laminated film 10 is attached to all over the inner surface of the pouch 1, but the film 10 may be attached only to an essential part. Specifically, the laminated film 10 is attached only to a part where a card should be placed. Herein, in the case that the laminated film 10 is attached to only the part, in which a card is to be contained, a metal layer comes to a position adjacent to the card. The metal layer and an antenna incorporated in the card interfere with each other, thereby reducing the efficiency of the antenna.
Hereafter, an example in which the laminated film 10 is attached to the essential part will be described.

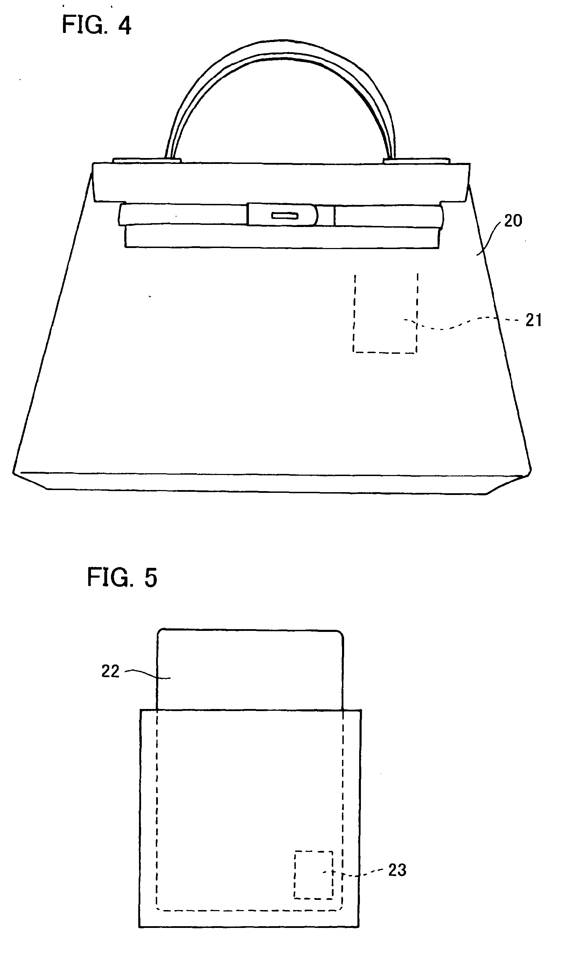

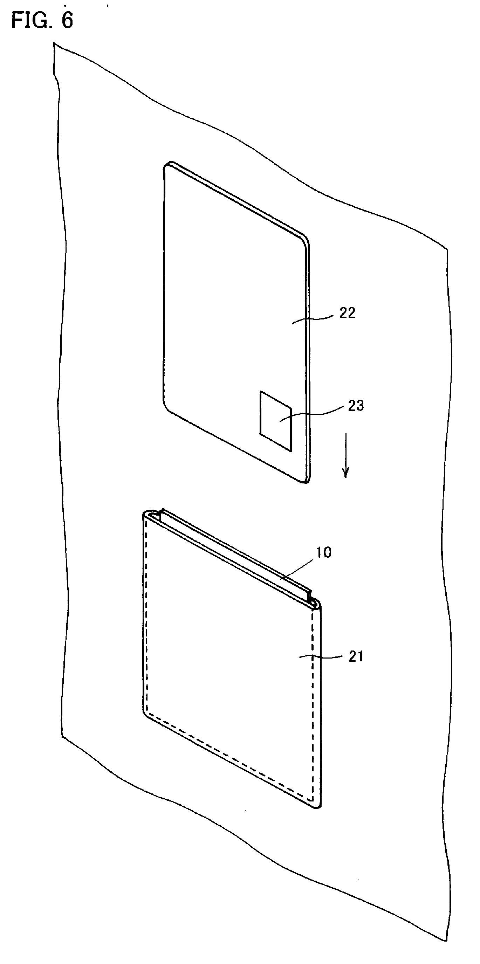

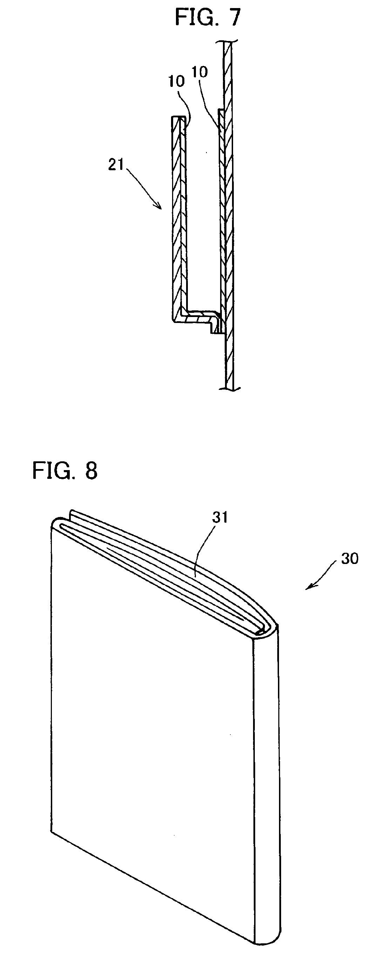

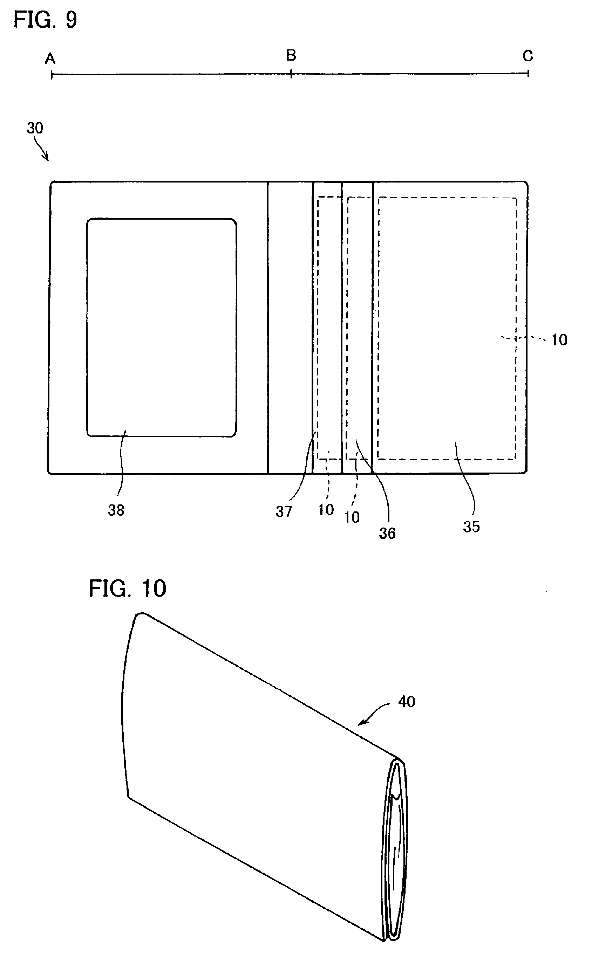

Fig. 4 is a front view of a handbag or a purse of a second embodiment of the present invention. Fig. 5 is a front view of an inner pocket of the handbag in Fig. 4. Fig. 6 is a perspective view showing the inner pocket in Fig. 5 with a card being inserted thereinto. Fig. 7 is a cross sectional view of the inner pocket in Fig. 5. Fig. 8 is a perspective view of a pass holder of a third embodiment of the present invention. Fig. 9 is a front view showing the pass holder in Fig. 8 in an opened condition.

A handbag (or a purse) 20 shown in Fig. 4 has therewithin an inner pocket (card insertion pocket) 21, into which a card 22 is generally inserted, as shown in Fig. 5. The card 22 is inserted into the inner pocket 21 such that part of the card 22 is exposed outside of the inner pocket 21, but the inner pocket 21 has a depth enough to conceal an IC chip 23 of the card 22. In the present embodiment, the above-mentioned laminated film 10 is sewn onto an inner surface of the inner pocket 21. Specifically, as shown in Fig. 7, the laminated film 10 is attached to the entire area of the inner surface of the inner pocket 21.

The laminated film 10 may be one employed in the above-mentioned embodiment, but more preferably is one adapted to transmit an electromagnetic wave having a wavelength in X-ray range and to shield an electromagnetic wave of radio range (3,000 GHz or less and a wavelength of 0.1 mm or more).

In the handbag 20 of the present embodiment, the laminated film 10 covers the inner pocket (card insertion pocket) 21, thereby preventing skimming of the card 22 therein.
Further, the laminated film 10 is not attached to the other storage area except the inner pocket 21, so that a mobile phone contained in the handbag 20 has a phone call.
On the other hand, when security check is conducted by X-rays at an airport or the like, all area of the handbag 20 transmits X-rays, so as to avoid being regarded with suspicion by examiners.

The present embodiment attaches the above-mentioned laminated film 10 to the inner surface of the inner pocket 21, but a metal layer adapted to transmit an electromagnetic wave of a wavelength in X-ray range may be attached thereto instead of the laminated film 10. The same can be said to embodiments described below, so that the laminated film 10 can be replaced by a metal layer adapted to transmit an electromagnetic wave of a wavelength in X-ray range.

Figs. 8 and 9 illustrate an example applying the present invention to a pass holder. A pass holder 30 shown in Figs. 8 and 9 is made of leather with a twofold structure. Fig. 9 shows the pass holder 30 in an opened condition, a left side (area A-B) of the figure being a pass holder and a right side (area B-C) of the figure being a card holder.
The right side (area B-C) has three card insertion pockets 35, 36, and 37. Each of the card insertion pockets 35, 36, 37 can accommodate a card with part of the card exposed outside of the pocket, but an IC chip 23 thereof is concealed.
The above-mentioned laminated film 10 is sewn onto an inner surface of each of the pockets 35, 36, and 37. Herein, the laminated film 10, as well as in the handbag 20, is preferably one adapted to transmit an electromagnetic wave having a wavelength in X-ray range and to shield an electromagnetic wave of radio range (3,000 GHz or less and a wavelength of 0.1 mm or more).

Into the left side (area A-B), as described above, a commutation pass is inserted. The pass holder 30 of the present embodiment has no laminated film at a pass insertion part 38 of the left side (area A-B) of the figure. Thus, an electromagnetic wave emitted from the pass inserted in the part 38 comes out from the part 38. Therefore, a noncontact train pass inserted in the part 38, for example, allows a passenger to go through a ticket gate without taking out the pass every time.

As shown in Fig. 8, when being folded, the pass holder 30 defines a gap 31 between the right and left sides (card insertion side and pass insertion side), the gap 31 being slight, so that an electromagnetic wave is substantially prevented from leaking. Specifically, the gap 31 is smaller than a wavelength of electromagnetic wave emitted from a card, so that the electromagnetic wave is prevented from leaking. Further, a plurality of aluminum foil layers 12 are formed adjacent to the gap 31, thereby attenuating the electromagnetic wave emitted from the card.

Next, a fourth embodiment of the present invention will be described in detail below.

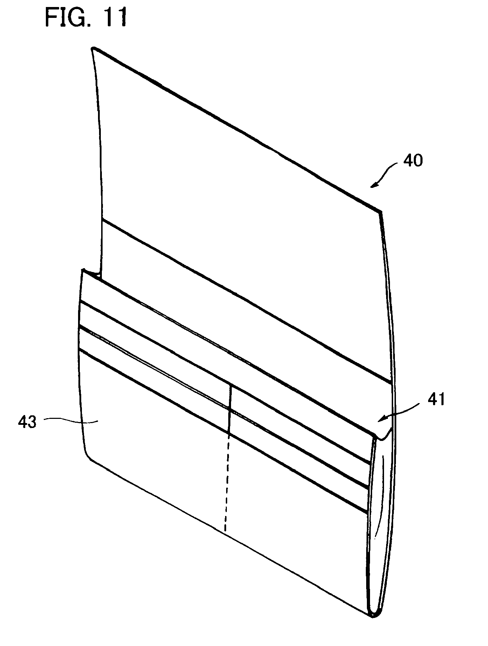

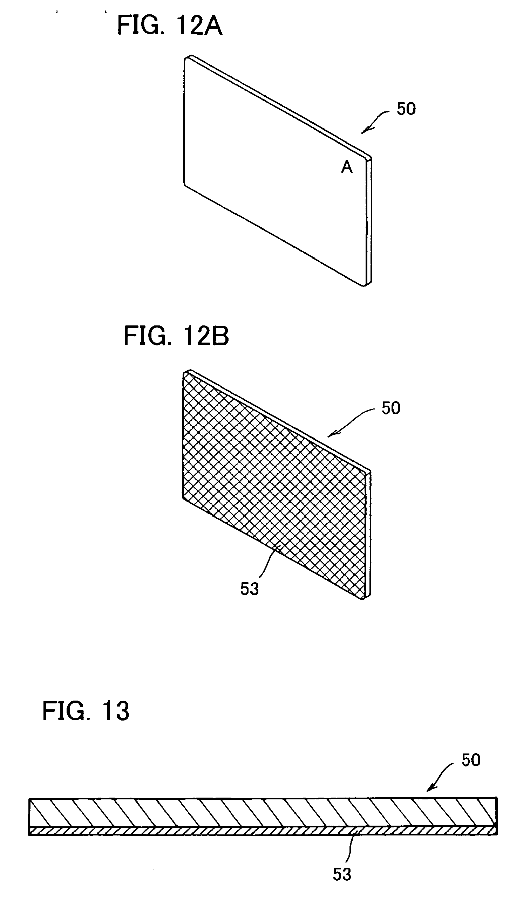

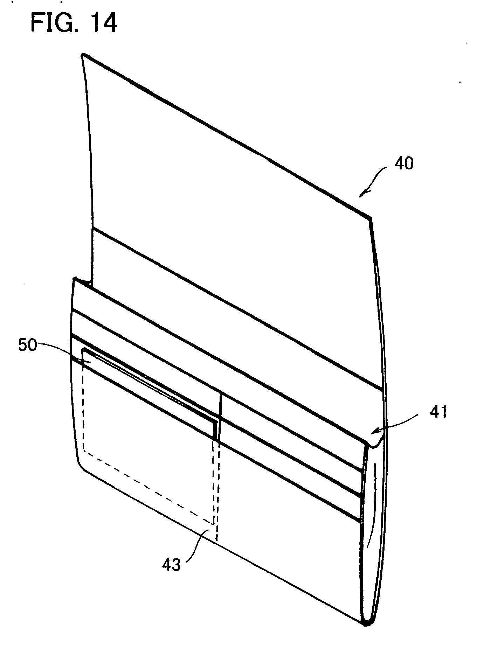

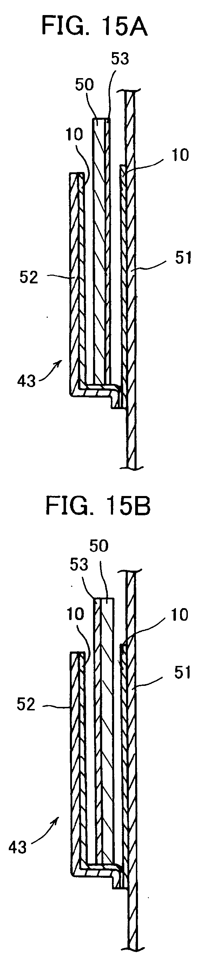

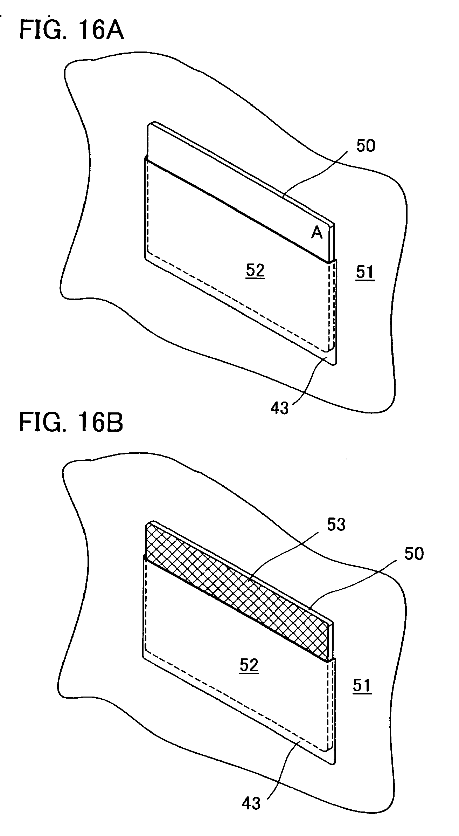

Fig. 10 is a perspective view of a wallet of the fourth embodiment of the present invention. Fig. 11 is a perspective view of the wallet in Fig. 10 in an opened condition. Figs. 12A and 12B are views of a card desirable to be inserted into the wallet in Fig. 10, Fig. 12A being a view of a front face of the card, and Fig. 12B being a view of a back face of the card. Fig. 13 is a cross sectional view of the card in Fig. 12. Fig. 14 is a perspective view of the wallet in Fig. 10 in which the card is inserted. Figs. 15A and 15B each are a cross sectional view of a pocket of the wallet in Fig. 10 in which the card is inserted. Figs. 16A and 16B each are a perspective view of the pocket of the wallet in Fig. 10 in which the card is inserted.

A wallet 40 of the present embodiment has a twofold structure with a bank bill insertion part 41, which has a plurality of card insertion pockets 43 at its entire surface. The card insertion pocket 43 has a depth shallower than a height of a card 50, so that the card 50 is inserted into the pocket 43 such that part of the card 50 is exposed outside of the pocket 43, as shown in Fig. 14.

Referring to Fig. 15, the card insertion pocket 43 is formed by an inner wall 51 facing a main body of the wallet 40 and an outer wall 52 defining a swell of a pocket. In the present embodiment, the laminated film (semi-transparent layer) 10 is attached to the entire inner surface of the pocket 43. Specifically, the laminated film 10 is sewed onto the inner surfaces of the inner and outer walls 51 and 52. Herein, the laminated film 10, as well as in the handbag 20, is preferably one adapted to transmit an electromagnetic wave having a wavelength in X-ray range and to shield an electromagnetic wave of radio range (3,000 GHz or less and a wavelength of 0.1 mm or more).

Further, the card 50 employed in the present embodiment has an aluminum foil (electromagnetic wave shielding layer) 53 attached to the entire surface of one side. Thus, the card 50 radiates an electromagnetic wave only from the other side and not from the side to which the aluminum foil 53 is attached. Referring to Figs. 12A, 12B, 16A, and 16B, the aluminum foil 53 is attached to a surface of a hatched side, the surface being a nonradiant surface of electromagnetic wave. A side showing a letter "A" is a radiant surface of electromagnetic wave.

By the wallet 40 of the present embodiment, in order to make a card reader to read out information without taking the card 50 out of the pocket 43, as shown in Figs. 15A and 16A, the card 50 is to be inserted in the pocket 43 so that the radiant surface of electromagnetic wave of the card 50 faces the outer wall 52.
In the present embodiment, as described above, the card 50 is inserted in the pocket 43 with part thereof exposed outside, so that an electromagnetic wave is radiated from the exposed part, thereby allowing a noncontact card reader to read out information recorded in the card 50.

Conversely, when the card 50 is inserted into the pocket 43 so that the side to which the aluminum foil 53 is attached faces the outer wall 52, an electromagnetic wave is prevented from leaking outside. That avoids skimming.
Further, since the present embodiment has a plurality of card insertion pockets 43, if a card contains information to be read out without taking the card out of the pocket, the card should be inserted into the pocket 43 with the radiant surface of electromagnetic wave facing the outer wall 52, and if not, the card should be inserted into the pocket 43 with the nonradiant surface facing the outer wall 52. That would be convenient.

Next, a fifth and a sixth embodiments of the present invention will be described in detail below.

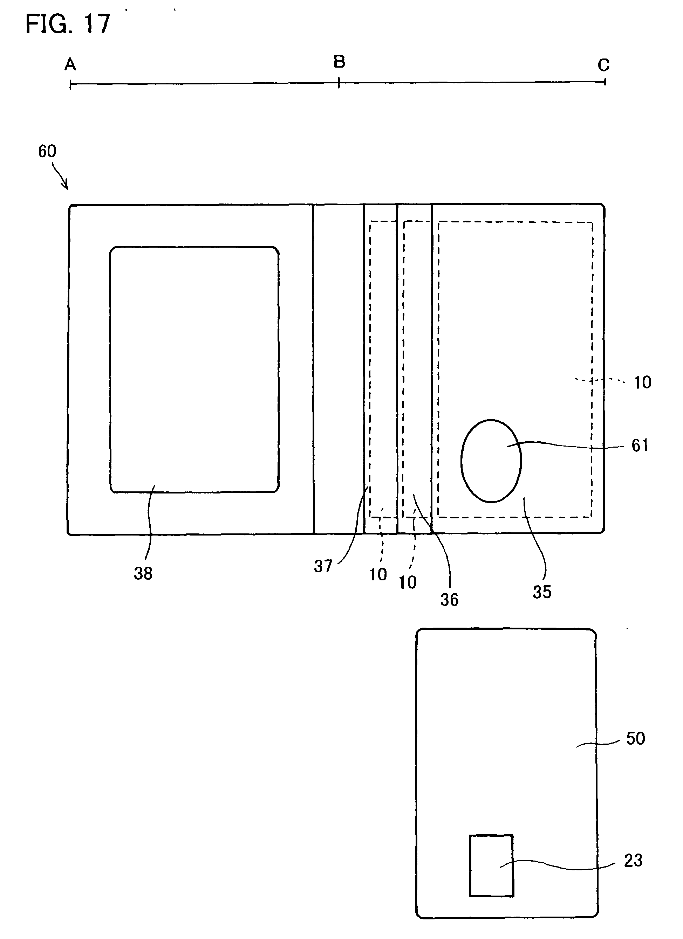

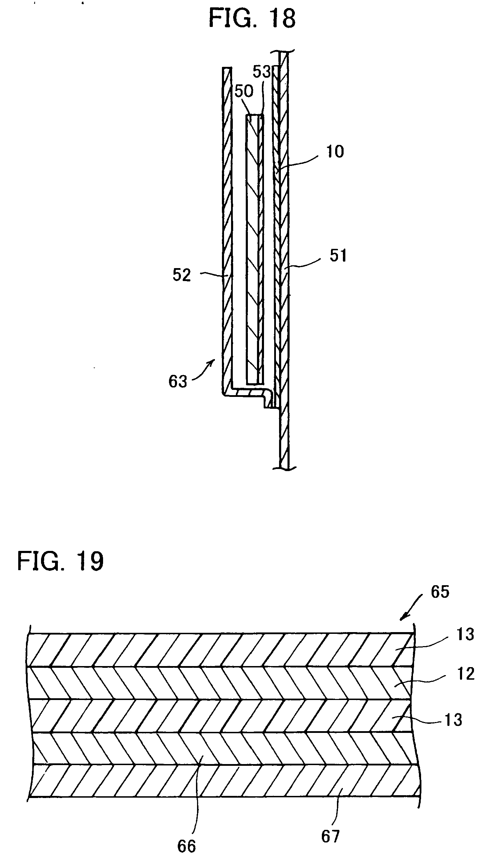

Fig. 17 is a front view of a pass holder of the fifth embodiment of the present invention in an opened condition and a front view of a card. Fig. 18 is a cross sectional view of a pocket of a pass holder of the sixth embodiment in which the card is inserted.

The fifth and sixth embodiments are modified embodiments of the fourth embodiment described above. In the fourth embodiment, the card insertion pocket 43 has a smaller depth so as to produce the exposed part of a card, through which an electromagnetic wave is radiated.
In contrast, a pass holder 60 shown in Fig. 17 has a card insertion pocket 35 that has a depth enough for a card 50 fit inside and that is provided with a hole 61. The hole 61 is located at a portion corresponding to a position of an IC chip 23 of the card 50.
By the pass holder 60 of the present embodiment, an electromagnetic wave is radiated through the hole 61. Other structures are the same as those in the above-mentioned pass holder 30 shown in Fig. 9.

Further, as shown in Fig. 18, a laminated film (semi-transparent layer) 10 may be attached to only an inner wall 51 and not to an outer wall 52. In the present embodiment, the outer wall 52 is permeable of an electromagnetic wave, so that insertion of a card 50 with a radiant surface of electromagnetic wave facing the outer wall 52 allows a noncontact card reader to read out information recorded in the card 50 without taking the card 50 out of a pocket 63.

Next, other applications of the protection film for preventing leakage of information of the present invention will be described in detail below.
The protection film can be also used for preventing leakage of electromagnetic wave not only from a pouch but also from a container or a storage for articles. When security check is conducted by X-rays at an airport or the like, the protection film transmits X-rays, so as to avoid being regarded with suspicion by examiners.

Specifically, the protection film attached to an outer or an inner surface of such container by adhering or sewing prevents leakage of electromagnetic wave. Though it might be rarely used for practical purposes, the protection film may be attached to curtains or wall papers. Further, the protection film may be directly stuck on walls.

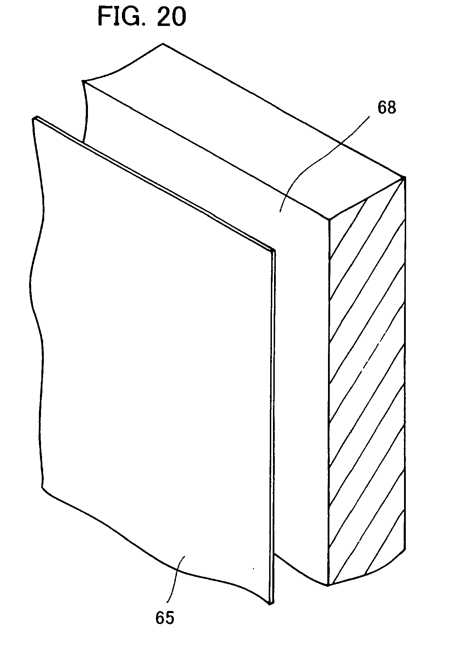

Fig. 19 is an enlarged cross sectional view of a protection film for preventing leakage of information to be stuck on a wall. Fig. 20 is a perspective view of the protection film in Fig. 19 in being stuck on a wall.

Referring to Fig. 19, a protection film 65 for preventing leakage of information to be stuck on a wall contains an aluminum foil layer 12 with resin layers 13 laminated on both sides thereof and an adhesion layer 66 and a removable paper layer 67 laminated on one of the resin layers 13. The protection film 65 is stuck on a surface of a wall 68, as shown in Fig. 20, by removing the removable paper layer 67 on the back.

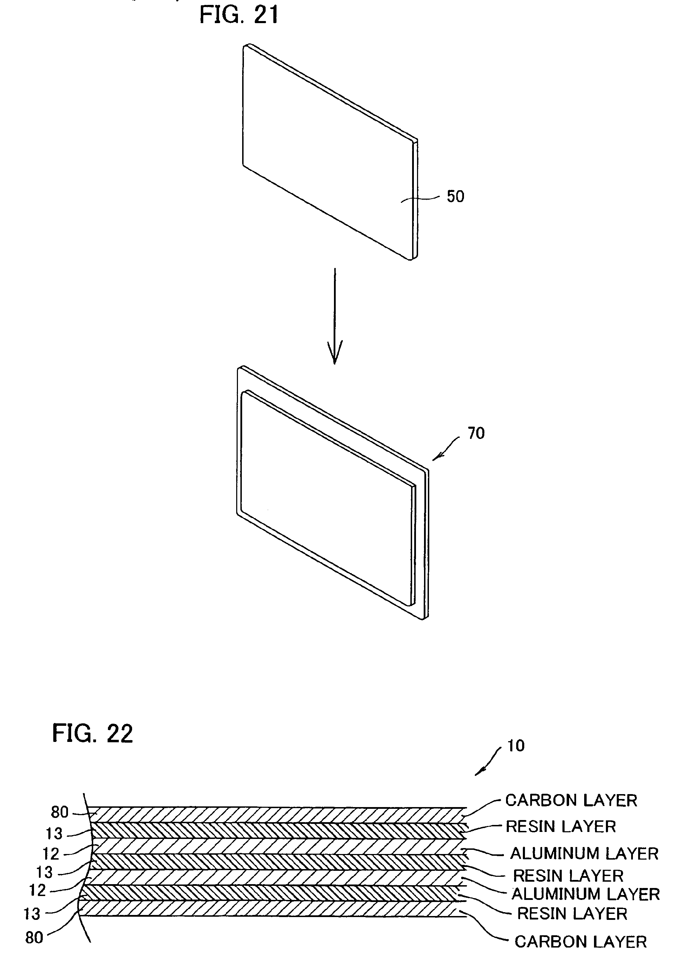

Further, the protection film may be directly used for producing a containing case. Fig. 21 is a perspective view of a card case made by a protection film for preventing leakage of information of the present invention.
In order to produce a card case 70 of the present embodiment, two protection films for preventing leakage of information are stacked and heat-sealed at three sides. The card case 70 has a bag-like shape and can accommodate a card 22.
Though it might be rarely used for practical purposes, the protection film may be attached to a lining or a part of clothes, an apron, or the like.

As described above, the portable pouch or the card holder of these embodiments shields an electromagnetic wave generated from a card, thereby avoiding skimming.

Next, modified embodiments of the laminated film 10 will be described in detail below. Figs. 22 to 27 each are an enlarged cross sectional view of a modified embodiment of the laminated film (protection film for preventing leakage of information) 10.
As described above, the laminated film 10 may have more than two layers, and more specifically, it is recommended to have such a layer structure as shown in Figs. 22 to 27.
A laminated film 10 shown in Fig. 22 has a resin layer 13 such as polyethylene terephthalate or polyethylene, two aluminum deposited layers 12 laminated on and sandwiching the resin layer 13, two resin layers 13 laminated on the aluminum deposited layers 12, and two carbon layers 80 laminated on the resin layers 13 as the outermost layers. The resin layers 13 each are 20 to 30 micrometers in thickness. The aluminum deposited layers 12 each are about 100 to 500 angstroms in thickness.
Herein, aluminum foil may be used instead of the aluminum deposited layers 12, so that the aluminum foil and a resin layer 13 glue together by an agent such as an adhesive agent.
The carbon layers 80 at the opposite sides each contain carbon compound having conjugated double bond.
A carbon compound having conjugated double bond has a function of absorbing an electromagnetic wave, so as to absorb an electromagnetic wave leaking from a card.

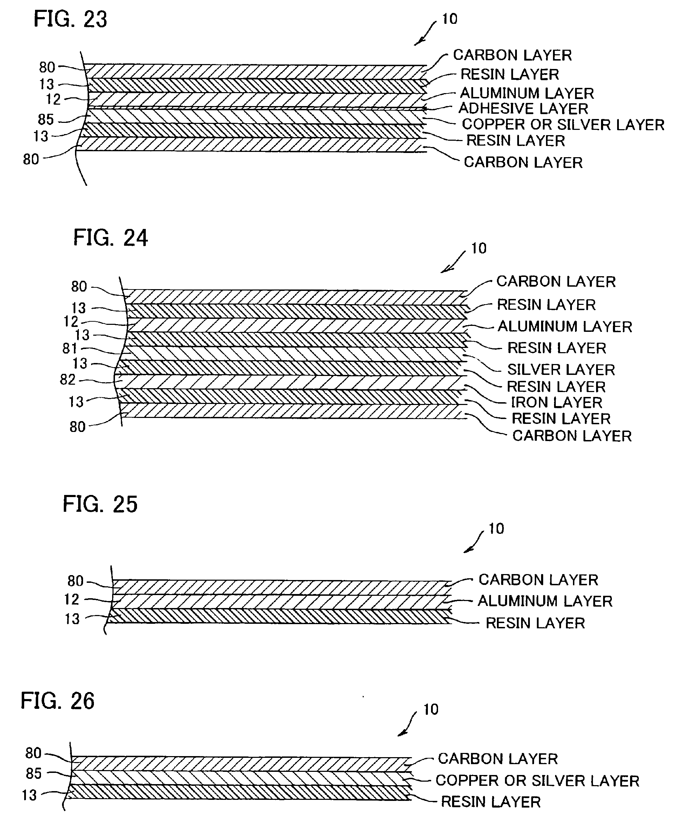

A laminated film 10 shown in Fig. 23 contains layers of different metals, that is, a copper or silver layer 85 is laminated on an aluminum foil layer 12. The copper or silver layer 85 may be bonded by vapor deposition or may glue together by an agent such as an adhesive agent after rendering it metallic foil. In the present embodiment, the aluminum foil layer 12 and the copper or silver layer 85 glue together by an adhesive agent (not shown).

The present embodiment contains layers of different metals and has a high function of shielding an electromagnetic wave even if a card has any kind of frequency. Specifically, a capacity of shielding an electromagnetic wave is influenced by a frequency of an electromagnetic wave to be shielded, but relationship between the frequency and the shielding capacity depends on a metal. Aluminum, for example, has a shielding capacity increasing with its frequency, but has an extremely decreased shielding capacity if the frequency exceeds a predetermined value. In contrast, silver has no appreciable decreased shielding capacity. Meanwhile, aluminum is inexpensive and silver is expensive.
The present embodiment contains an aluminum layer and a silver layer, thereby reducing influence of a frequency and exerting a stable shielding function in any frequency range.

A laminated film 10 shown in Fig. 24 further contains an iron (ferrite) layer 82. Specifically, the laminated film 10 shown in Fig. 24 contains metal layers 12, 81, and 82; that is, an aluminum foil layer 12, a silver layer 81, and the iron layer 82. Resin layers 13 such as polyethylene terephthalate are sandwiched between the metal layers 12 and 81 and between the metal layers 81 and 82. Further, at the outermost layers, carbon layers 80 are laminated on other resin layers 13 such as polyethylene terephthalate laminated on the metal layers 12 and 82.
The laminated film 10 of the present embodiment has the iron layer 82, thereby shielding also magnetism. Further, a lead layer may be added thereto, or a lead layer may be formed instead of the iron layer 82 or the silver layer 81.

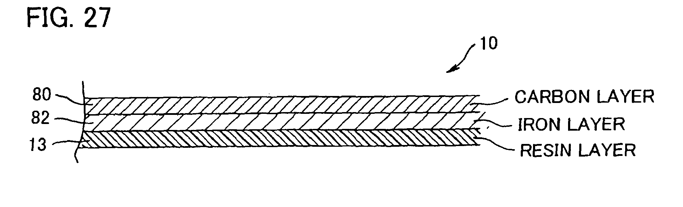

The above-mentioned embodiments each have an elaborate laminated structure, but as shown in Fig. 25, it is also possible to employ such a structure as containing an aluminum foil layer 12 with a carbon layer 80 laminated on one side thereof and a resin layer 13 laminated on the other side thereof. Further, as shown in Fig. 26, it is possible to employ such a structure as containing a silver or copper layer 85 instead of an aluminum foil layer 12 with a carbon layer 80 laminated on one side thereof and a resin layer 13 laminated on the other side thereof. Still further, as shown in Fig. 27, it is possible to employ such a structure as containing an iron layer 82 instead of an aluminum foil layer 12 with a carbon layer 80 laminated on one side thereof and a resin layer 13 laminated on the other side thereof. A lead layer may be formed instead of the silver or copper layer 85 or the iron layer 82.

## Claims

1. A portable container comprising in at least part thereof a semi-transparent layer adapted to transmit an electromagnetic wave having a wavelength in X-ray range and to shield an electromagnetic wave having a wavelength in a range of an electromagnetic wave generated from a non-contact information recording medium.

2. A portable container comprising a storage section covered with a semi-transparent layer adapted to transmit an electromagnetic wave having a wavelength in X-ray range and to shield an electromagnetic wave having a wavelength in a range of an electromagnetic wave generated from a non-contact information recording medium.

3. A portable container comprising in at least part thereof a semi-transparent layer adapted to transmit electromagnetic waves having a wavelength in X-ray range and having a wavelength in a range of a mobile phone and to shield an electromagnetic wave having a wavelength in a range of an electromagnetic wave generated from a non-contact information recording medium.

4. A portable container comprising a storage section covered with a semi-transparent layer adapted to transmit electromagnetic waves having a wavelength in X-ray range and having a wavelength in a range of a mobile phone and to shield an electromagnetic wave having a wavelength in a range of an electromagnetic wave generated from a non-contact information recording medium.

5. The container as defined in one of claims 1 to 4,
wherein the semi-transparent layer is a film comprising a metal foil layer and a resin layer laminated on each other.

6. The container as defined in one of claims 1 to 4,
wherein the semi-transparent layer comprises at least a first and a second metal foil layers, the first metal foil layer having a higher electromagnetic wave reflection than the second metal foil layer and the second metal foil layer having a higher electromagnetic wave absorption than the first metal foil layer, and
the first metal foil layer being positioned at an outer side of the second metal foil layer.

7. The container as defined in one of claims 1 to 4,
wherein the semi-transparent layer is composed of a plurality of laminated films.

8. A portable container comprising a card insertion pocket,
the card insertion pocket having a metal layer adapted to transmit an electromagnetic wave having a wavelength in X-ray range.

9. A protection film for preventing leakage of information adapted to transmit an electromagnetic wave having a wavelength in X-ray range and to shield an electromagnetic wave having a wavelength in a range of an electromagnetic wave generated from a non-contact information recording medium.

10. A protection film for preventing leakage of information adapted to transmit electromagnetic waves having a wavelength in X-ray range and having a wavelength in a range of a mobile phone and to shield an electromagnetic wave having a wavelength in a range of an electromagnetic wave generated from a non-contact information recording medium.

11. The protection film as defined in claim 9 or 10,
comprising a metal foil layer and a resin layer laminated on each other.

12. The protection film as defined in one of claims 9 to 11, comprising at least a first and a second metal foil layers, the first metal foil layer having a higher electromagnetic wave reflection than the second metal foil layer and the second metal foil layer having a higher electromagnetic wave absorption than the first metal foil layer.

13. The protection film as defined in one of claims 9 to 12,
being composed of a plurality of laminated films.

14. The protection film as defined in one of claims 9 to 13,
having an adhesion layer formed on at least one side of the film.
